# EUROPEAN PATENT SPECIFICATION

(11) **EP 2 180 545 B1**
(45) Date of publication and mention of the grant of the patent: **18.01.2017**
(21) Application number: 09013387.7
(22) Date of filing: 22.10.2009
(51) Int. Cl.: B60R 25/102, G01S 19/16, H01Q 1/32

(54) **Straddle-type vehicle**
Grätschsitz-Fahrzeug
Véhicule de type à enfourcher

(30) Priority: 24.10.2008 JP 2008274893; 30.09.2009 JP 2009226681
(43) Date of publication of application: 28.04.2010
(60) Divisional application: 11008955.4
(73) Proprietor: Yamaha Hatsudoki Kabushiki Kaisha, Shizuoka-ken Shizuoka 438-8501 (JP)
(72) Inventor: Okada, Takeshi, Iwata-shi Shizuoka-ken 438-8501 (JP); Ozawa, Toshiaki, Iwata-shi Shizuoka-ken 438-8501 (JP)
(74) Representative: Grünecker Patent- und Rechtsanwälte PartG mbB

(56) References cited:
- EP-A- 0 755 852
- EP-A- 1 081 035
- EP-A- 1 247 706

## Description

The present invention relates to a straddle-type vehicle, in particular a motorcycle, and more particularly to a straddle-type vehicle including a GPS unit that transmits a position signal indicating positional information.

Prior art document EP 1 081 035 A2 discloses a scooter type vehicle having a body frame, fuel tank, a radiator reservoir tank, and a radiator are provided in a cradle space surrounded by pipes of the body frame. A power unit having a water-cooled engine provided at a front portion thereof is provided rearwardly of the cradle space. Furthermore, a GPS sensor which receives GPS satellite radio waves for a navigation system and outputs measurement position data and an MPU serving as a system controller for controlling the navigation system are disposed on the front cover. The GPS sensor may be mounted at such a position of a rear end portion of the vehicle body which is not hidden by a driver such as, for example, a rear upper cover.

JP 2002-362448 A discloses an arrangement in which a motorcycle is provided with a device arranged to inform about a theft by radio transmission. More specifically, an anti-theft device that informs about the location of a stolen vehicle using a positioning system such as GPS (Global Positioning System) and PHS (Personal Handy-phone System) is provided in a helmet storing box for which the seat that can be locked serves as an operable lid. The device is provided so that a stranger cannot find easily without unlocking while the owner can check the indicator easily by opening the lid and rain water can be prevented from entering.

An anti-theft device is preferably provided so that the receiving sensitivity is maximized. However, the above-described document does not mention anything about the point.

It is an objective of the present invention to provide a straddle-type vehicle with a GPS unit having a good receiving sensitivity.

According to the present invention said objective is solved by a motorcycle having the features of independent claim 1. Preferred embodiments are laid down in the dependent claims.

Accordingly, it is provided a straddle-type vehicle, in particular a motorcycle, comprising: a frame extending from a front to a back of the straddle-type vehicle; a seat provided above a rear part of the frame; a taillight; and a Global Positioning System (GPS) unit provided above the taillight, wherein the GPS unit comprises at least an antenna provided in a position higher than the frame and behind the seat.

Accordingly, the seat, the taillight, and the frame are not provided above the GPS unit, and therefore degradation in the receiving sensitivity of the antenna is reduced.

The GPS unit further comprises a GPS receiver to calculate positional information based on a GPS signal received by the antenna, and a position transmitter configured to transmit a position signal indicating the positional information calculated by the GPS receiver from the antenna.

Further, preferably the GPS unit is stored in a storage member provided above the taillight, said storage member preferably including an upper plate, a front plate, a rear plate, and a pair of side plates.

Still further, preferably the front plate of the storage member extends obliquely downward to the front of the straddle-type vehicle from the upper plate, and/or a lower end of the front plate is provided under the seat and is attached to the frame.

Yet further still, preferably the storage member has an opening at its lower end.

Preferably, a unit attachment member is attached to the frame and is provided between the taillight and the GPS unit, the GPS unit being attached on the unit attachment member.

According to a preferred embodiment, the GPS unit further comprises a GPS case storing the antenna, the GPS receiver, and the position transmitter, and a connector formed at a front surface of the GPS case, the connector being provided nearer to one side surface of the GPS case than a central axis of the front surface of the GPS case, and/or the unit attachment member further comprising an interfering member provided in front of the GPS case and on the opposite side to the connector with respect to a central axis of the front surface of the GPS case, and/or the antenna being provided in an upper part of the GPS case.

Preferably, a pair of side covers is attached to right and left side surfaces of the rear part of the frame, and the storage member is attached between the pair of side covers.

Further, preferably each of the pair of the side covers comprises a side cover attachment member provided under the seat and attached to the frame.

Still further, preferably the GPS unit is substantially flat and laid in the storage member.

Yet further still, preferably the storage member further comprises a lower plate.

Preferably, the storage member is configured to store the GPS unit and a tool substantially horizontally next to each other.

Further, the antenna is provided behind a grab bar of the straddle-type vehicle.

Still further, preferably a rear carrier preferably including a plurality of bars provided apart from one another is located above the storage member.

In the following, the present invention is explained in greater detail by means of embodiments thereof in conjunction with the accompanying drawings, wherein:
Fig. 1 is a functional block diagram showing the structure of an entire anti-theft system according to a first embodiment.
Fig. 2 is a side view of the motorcycle according to the first embodiment.
Fig. 3 is a perspective view of the rear part of the motorcycle shown in Fig. 2.
Fig. 4 is a plan view of the rear part of the motorcycle shown in Fig. 2.
Fig. 5 is a plan view of the rear part of the motorcycle removed of a seat in Fig. 2.
Fig. 6 is a perspective view of the inside of a storage member in Fig. 3.
Fig. 7 is a perspective view of the rear part of the motorcycle removed of the seat, a grab bar, a rear carrier, a side cover, and the storage member in Fig. 2.
Fig. 8 is a plan view of the rear part of the motorcycle removed of the seat, the grab bar, the rear carrier, the side cover, and the storage member in Fig. 2.
Fig. 9 is a perspective view of a GPS unit and a unit attachment member in Fig. 7.
Fig. 10 is a perspective view of the rear part of the motorcycle having the GPS unit in Fig. 7 attached to the unit attachment member.
Fig. 11 is a sectional view taken along line XI-XI in Fig. 4.
Fig. 12 is a sectional view taken along line XII-XII in Fig. 4.
Fig. 13 is a side view of the rear part of a motorcycle according to a second embodiment.
Fig. 14 is a perspective view of the rear part of the motorcycle shown in Fig. 13.

Now, preferred embodiments will be described in detail in conjunction with the accompanying drawings, in which the same or corresponding portions are denoted by the same reference characters, and their description will not be repeated. In the following description, directions such as the "up and down" and "right and left" refer to these directions viewed from a rider seated on the motorcycle.

### First Embodiment

To start with, an anti-theft system for use in a motorcycle according to preferred embodiments will be described.

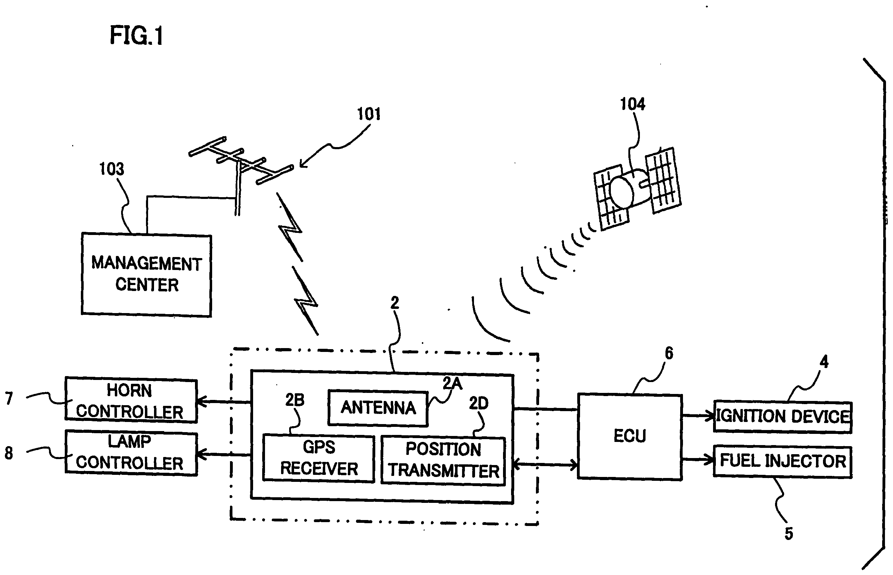

Fig. 1 is a functional block diagram showing the structure of an entire anti-theft system. With reference to Fig. 1, the anti-theft system includes a Global Positioning System (GPS) unit 2 provided at the motorcycle, a GPS satellite 104, and a management center 103.

The GPS unit 2 includes an antenna 2A, a GPS receiver 2B, and a position transmitter 2D. The antenna 2A receives GPS signals transmitted from the GPS satellite 104. The GPS receiver 2B calculates positional information based on GPS signals received by the antenna 2A. The GPS unit 2 is provided at the motorcycle, and therefore the GPS receiver 2B calculates the positional information of the motorcycle.

The GPS unit 2 stores the identification information of the motorcycle in a memory that is not shown. The position transmitter 2D transmits a position signal indicating positional information and an identification signal indicating identification information from the antenna 2A. The management center 103 receives the position signal and the identification signal through the radio communication network 101 and manages the positional information and the identification information.

The GPS unit 2 is connected to an Electronic Control Unit (hereinafter referred to as "ECU") 6, a horn controller 7, and a lamp controller 8. The ECU 6 is connected to the ignition device 4 and the fuel injector 5 of the engine.

The GPS unit 2 controls the ignition device 4 and the fuel injector 5 through the ECU 6. The GPS unit 2 also receives information about whether the engine is driven (hereinafter referred to as "driving information") from the ECU 6. The GPS unit 2 transmits a driving signal indicating driving information. The GPS unit 2 further activates a horn or flashes a lamp through the horn controller 7 and the lamp controller 8.

When a motorcycle is stolen, the rider of the motorcycle informs the management center 103 of the fact. The management center 103 keeps receiving position signals, identification signals and driving signals transmitted from the GPS unit 2 of the stolen motorcycle. Therefore, the management center 103 can specify the location of the stolen motorcycle and track down the vehicle.

The management center 103 further controls the stolen motorcycle. More specifically, the management center 103 transmits an alarm command to the GPS unit 2. The GPS unit 2 controls the horn controller 7 to activate the horn in response to the alarm command. The GPS unit 2 also controls the lamp controller 8 to flash the lamp in response to the alarm command. In this way, people around the motorcycle can be aware that the motorcycle is a stolen vehicle.

The management center 103 further transmits a stop command to the GPS unit 2. The GPS unit 2 responds to the stop command and controls the ECU 6 so that the ignition device 4 and the fuel injector 5 are not operated. This stops the engine.

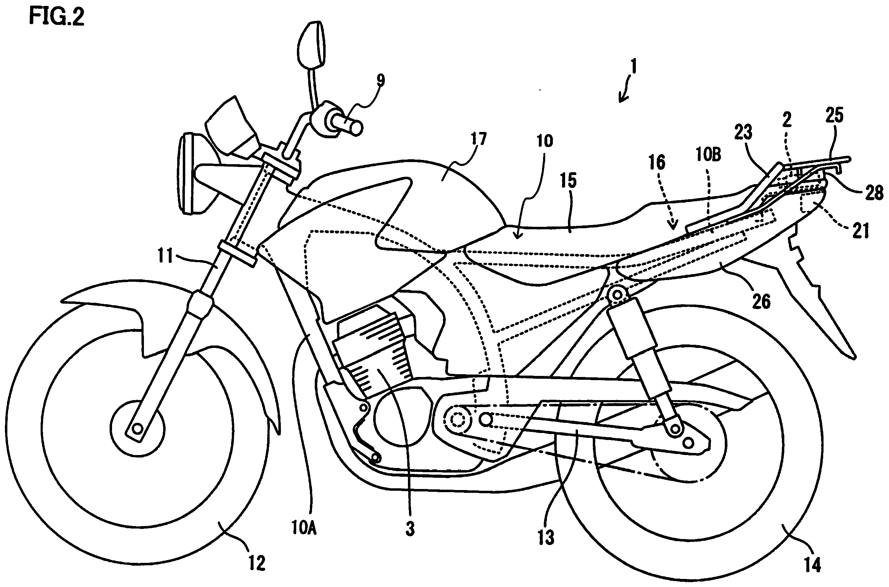

Now, a motorcycle according to the present preferred embodiments will be described. Fig. 2 shows a left side of the motorcycle 1 facing the forward direction (FWD) of the motorcycle. With reference to Fig. 2, the motorcycle 1 includes a frame 10, a fuel tank 17, an engine 3, a seat 15, and a GPS unit 2.

The frame 10 extends from a front to a back of the motorcycle 1. The frame 10 includes a front frame 10A and a pair of rear frames 10B. The front frame 10A is provided at the front part of the frame 10 and the pair of rear frames 10B are provided at the rear part of the frame 10.

The engine 3 is provided at the front frame 10A. The fuel tank 17 is provided above the front frame 10A. A steering shaft 11 is rotatably supported at the front end of the front frame 10A. A handle 9 is attached to the upper end of the steering shaft 11. A front wheel 12 is rotatably attached to the lower end of the steering shaft 11.

The front end of a rear arm 13 is provided at the rear part of the front frame 10A. The rear arm 13 swings up and down around the tip end of the rear arm 13. A rear wheel 14 is rotatably provided to the rear end of the rear arm 13.

The pair of rear frames 10B are made of metal pipes. The pair of rear frames 10B extend slightly obliquely upward from the front frame 10A to the back of the motorcycle 1. The rear frames 10B are provided above the rear wheel 14 when seen in a side view.

The seat 15 is provided above the rear frames 10B. The seat 15 is attached to the rear frames 10B in a detachable manner by bolts. A pair of side covers 26 are provided on the right and left sides of the rear part of the pair of rear frames 10B. The side covers 26 extend slightly obliquely upward to the back along the rear frames 10B. The rear ends of the side covers 26 are behind the seat 15 and the rear frames 10B.

A taillight 21 is provided behind the rear frames 10B. The taillight 21 is fixed between the pair of side covers 26. The taillight 21 is provided behind the seat 15. The GPS unit 2 is provided behind the seat 15 and above the taillight 21. The GPS unit 2 has a substantially flat rectangular parallelepiped shape. The GPS unit 2 is covered with a storage member 28. The storage member 28 is fixed between the pair of side covers 26. A rear carrier 25 is provided above the storage member 28. The rear carrier 25 is used to place a baggage thereon.

The seat rear part has a grab bar 23. The grab bar 23 is grasped by a tandem rider.

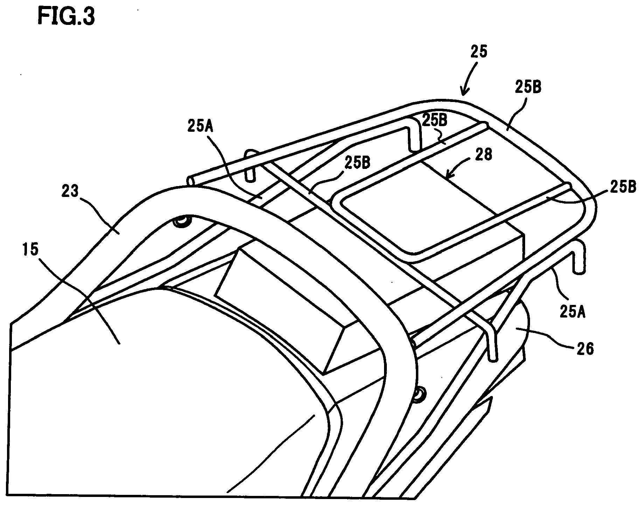

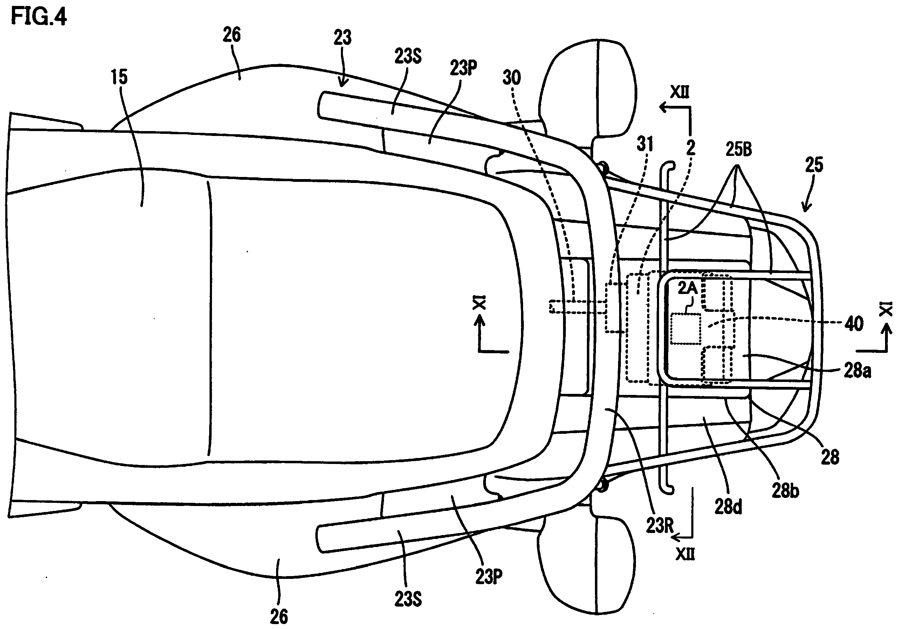

Fig. 3 is a perspective view of the rear part of the motorcycle 1 and Fig. 4 is a plan view of the rear part of the motorcycle 1. With reference to Fig. 3, the grab bar 23 is provided behind the seat 15 along the rear end peripheral edge of the seat 15. With reference to Fig. 4, the grab bar 23 includes a pair of side bars 23S and a rear bar 23R. The pair of side bars 23S are provided near the right and left side edges of the rear part of the seat 15. The rear bar 23R is provided between the rear ends of the two side bars 23S. The rear bar 23R and the side bars 23S are integrally formed.

The rear bar 23R is provided behind the rear end of the seat 15 and in a position higher than the seat 15. The side bars 23S extend obliquely downward to the front from the end of the rear bar 23R.

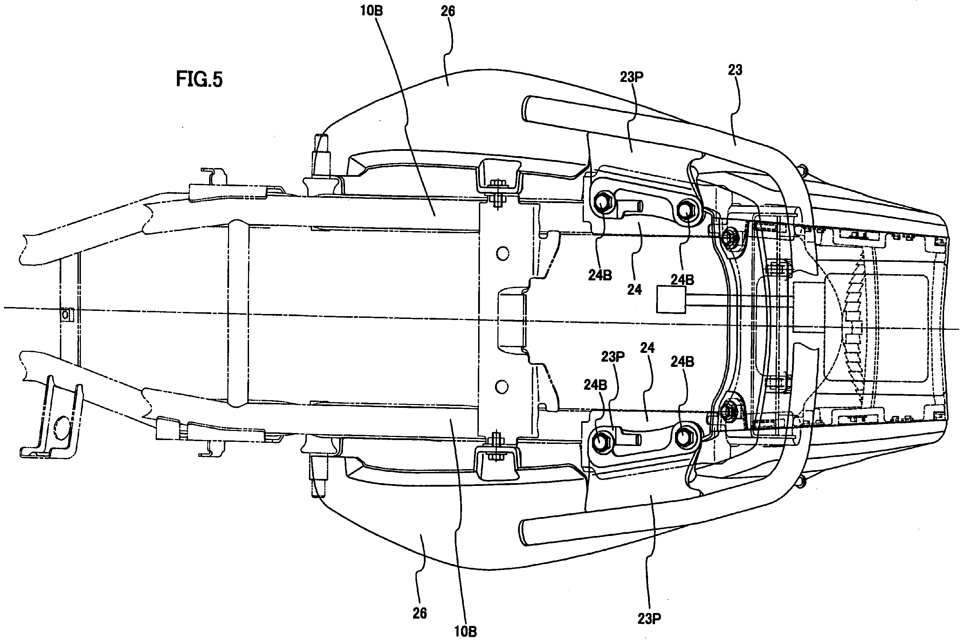

The side bars 23S are each provided with a cantilever plate type attachment member 23P by welding. The tip end of the attachment member 23P is provided under the seat 15. Fig. 5 is a plan view of the rear part of the motorcycle 1 removed of the seat 15. With reference to Fig. 5, the tip ends of the attachment members 23P are provided in a detachable manner by bolts 24B at the support plates 24 welded on the upper surfaces of the rear ends of the rear frames 10B.

The connection portion between the attachment members 23P and the support plates 24, and the bolts 24B are provided under the seat 15. More specifically, the seat 15 hides the tip ends of the attachment members 23P and the bolts 24B. In order to remove the grab bar 23 from the motorcycle 1, the seat 15 must be removed from the rear frames 10B.

With reference to Figs. 3 and 4, the rear carrier 25 is provided behind the grab bar 23. The rear carrier 25 is attached to the grab bar 23 by welding. The rear carrier 25 includes a pair of bars 25A and a plurality of bars 25B. The plurality of bars 25B is provided apart from one another. Therefore, a gap is formed between adjacent bars 25B. In short, the rear carrier 25 is formed by a plurality of bars provided apart from one another.

The plurality of bars 25B is connected to one another by welding. The pair of bars 25A extend obliquely upward from the grab bar 23 to the back. The tip end of each of the bars 25A is attached to a corresponding side bar 23S by welding, and the rear end is attached to the bars 25B by welding. In short, the rear carrier 25 is attached to the grab bar 23 by welding.

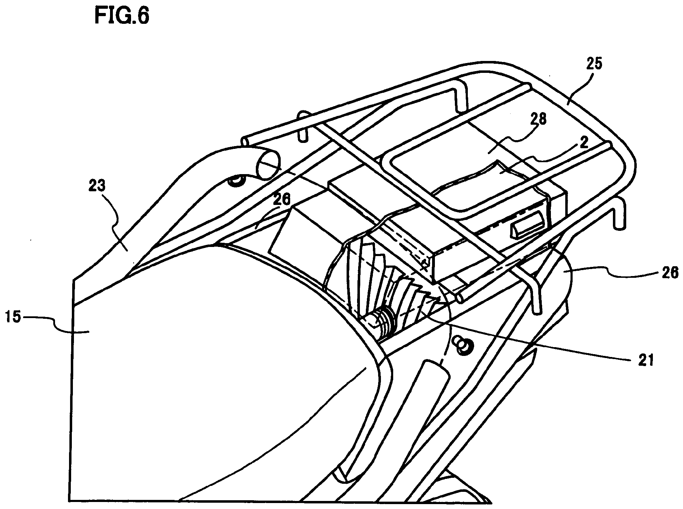

Fig. 6 is a perspective view showing the inside of the storage member 28 in Fig. 3. With reference to Fig. 6, the storage member 28 is provided above the taillight 21. The storage member 28 has a box shape and includes an upper plate, a front plate, a rear plate, and a side plate. The storage member 28 further has an opening at its lower surface. The storage member 28 is fixed between the pair of the side covers 26.

The GPS unit 2 is laid in the storage member 28. Stated differently, the area of the GPS unit 2 stored in the storage member 28 when seen in a top view is greater than in a side view. In other words, the GPS unit 2 is provided to be thin in the vertical direction. In other words, the GPS unit 2 is provided to have a smaller size in the vertical direction than in the crosswise and front-back directions. As described above, the GPS unit 2 has a substantially flat shape. When the GPS unit 2 is laid and stored in the storage member 28, the height of the storage member 28 can be kept low. As shown in Fig. 4, the width of the GPS unit 2 is smaller than the width of the seat 15. Therefore, the width of the storage member 28 in the crosswise direction can be reduced. Therefore, it does not bother a rider when the rider gets on/off the motorcycle 1. The storage member 28 is provided above the taillight 21, and therefore the rear part of the motorcycle 1 can be prevented from having a large size.

With reference to Fig. 6, the taillight 21 is provided under the GPS unit 2. The taillight 21 includes a lamp as a light source and a light source case that stores the lamp. The taillight 21 emits light to the back.

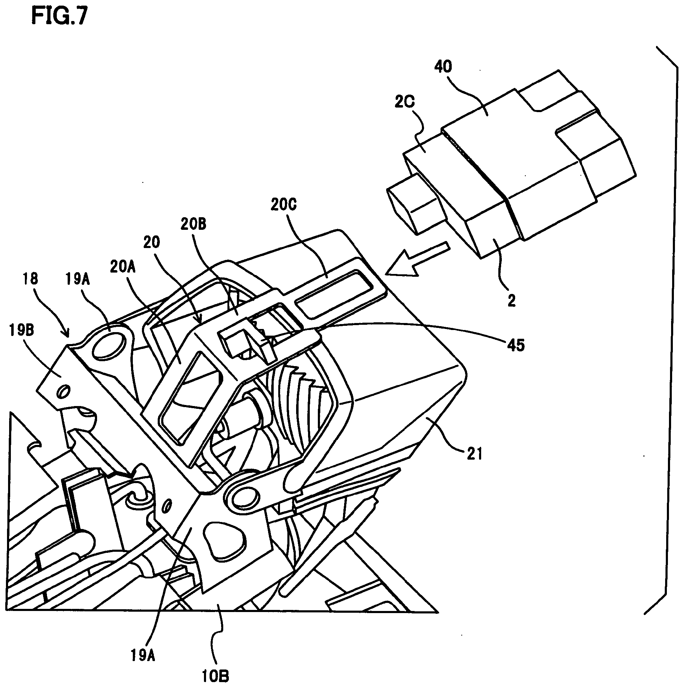

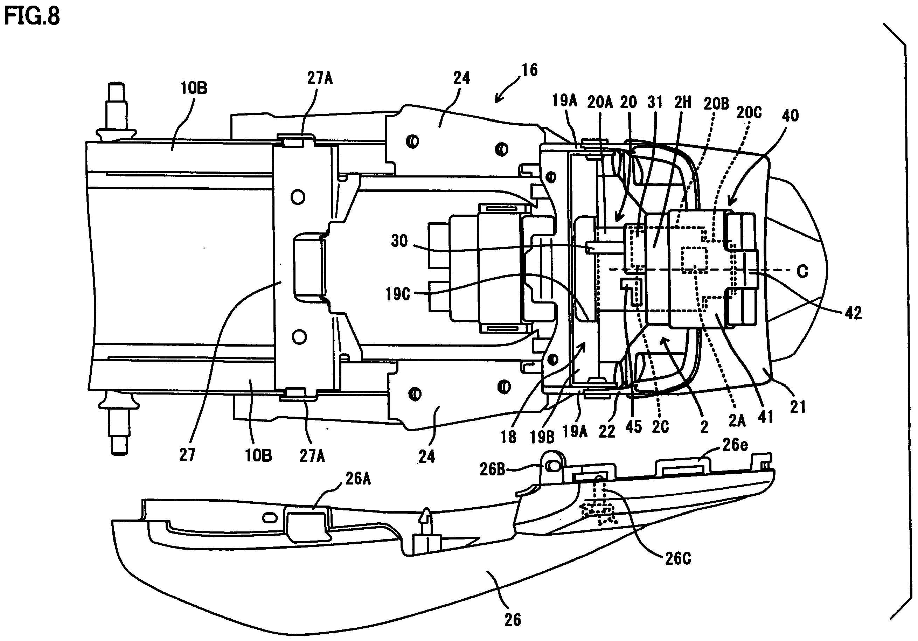

Fig. 7 is a perspective view of the rear part of the motorcycle 1 removed of the seat 15, the grab bar 23, the rear carrier 25, the side covers 26, and the storage member 28, and Fig. 8 is a plan view thereof, both showing an attachment mechanism for the GPS unit 2.

With reference to Figs. 7 and 8, an attachment frame 18 is welded to the rear ends of the pair of rear frames 10B. The attachment frame 18 is extended between the pair of rear frames 10B.

The attachment frame 18 includes a pair of plate-shaped support members 19A, a beam 19B, and a unit attachment member 20. The pair of support members 19A are provided upright on the pair of rear frames 10B. The beam 19B is provided between the two support members 19A.

The unit attachment member 20 has a plate shape and extends obliquely upward to the back from the center of the beam 19B. The unit attachment member 20 includes an inclined plate 20A, a support plate 20B, and an insert plate 20C in the mentioned order from the front to the back. The inclined plate 20A, the support plate 20B, and the insert plate 20C are integrally formed.

The inclined plate 20A extends obliquely upward to the back from the beam 19B. The support plate 20B extends slightly obliquely upward from the rear end of the inclined plate 20A to the back. The support plate 20B is inclined more mildly than the inclined plate 20A. The insert plate 20C has a width smaller than the support plate 20B and extends backward from the rear end of the support plate 20B.

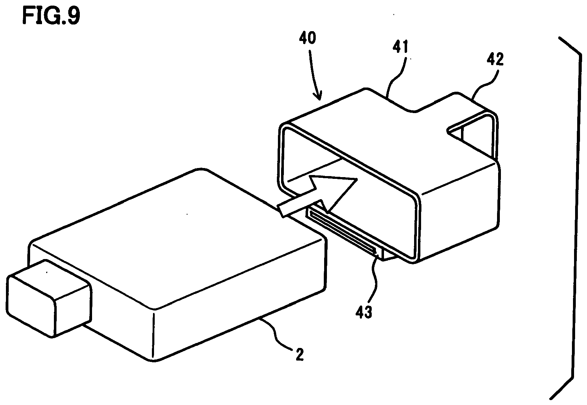

The GPS unit 2 is attached to the unit attachment member 20. With reference to Fig. 9, the GPS unit 2 is provided with an elastic band 40. The elastic band 40 includes a square tube shaped band member 41 and a band member 42. The band member 42 connects the rear ends of the upper and lower surfaces of the band member 41. A flat rectangular parallelepiped attachment member 43 is formed at the lower outer surface of the band member 41. A through hole penetrating the attachment member 43 from the tip end to the rear end is formed in the center of the attachment member 43.

The GPS unit 2 is inserted into the elastic band 40 from its rear end. The rear end surface of the GPS unit 2 is in contact with the band member 42. The elastic force of the elastic band 40 binds the GPS unit 2.

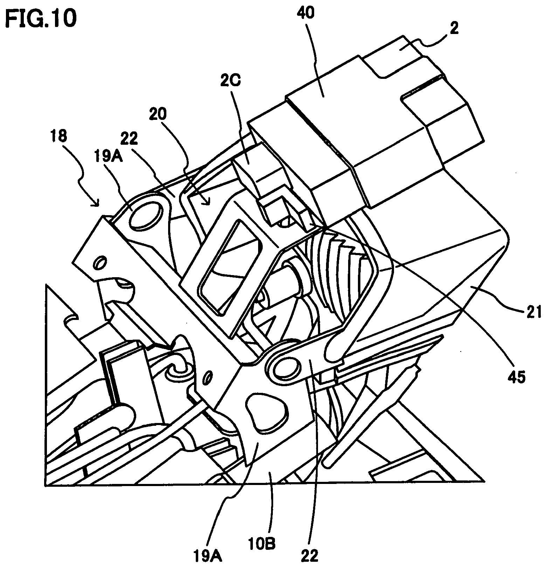

The GPS unit 2 bound by the elastic band 40 is attached to a unit attachment member 20. As shown in Fig. 7, the insert plate 20C is inserted into the through hole of the attachment member 43 of the elastic band 40. In this way, as shown in Fig. 10, the GPS unit 2 is attached on the unit attachment member 20. At the time, the GPS unit 2 is provided on the insert plate 20C and the support plate 20B. The insert plate 20C and the support plate 20B contact the elastic band 40. Since the friction resistance of the elastic band 40 is large, the GPS unit 2 is not easily removed from the unit attachment member 20.

The GPS unit 2 is attached to the unit attachment member 20 through the elastic band 40. Vibration is not easily transmitted to the GPS unit 2 from the unit attachment member 20 because of the elastic band 40.

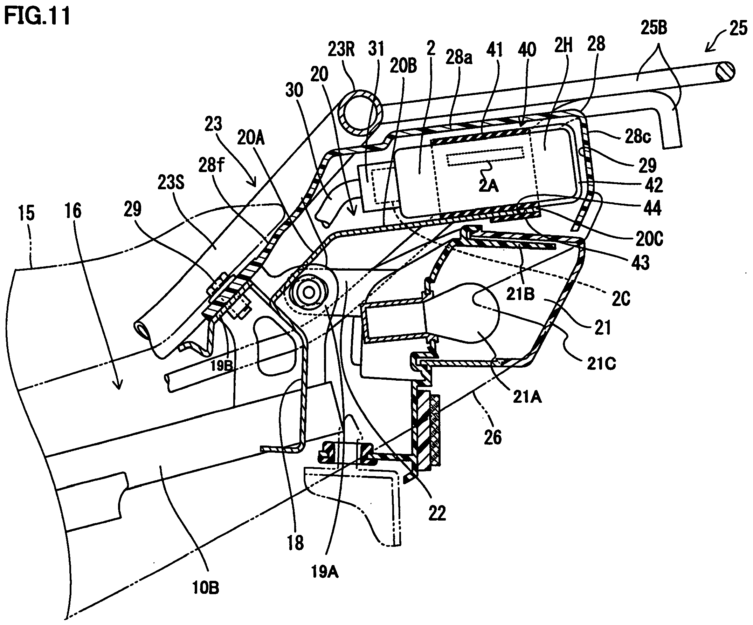

Fig. 11 is a sectional view taken along line XI-XI in Fig. 4. With reference to Fig. 11, the GPS unit 2 includes a GPS case 2H, an antenna 2A, a GPS receiver 2B (Fig. 1), and a position transmitter 2D (Fig. 1). The GPS case 2H has a flat rectangular parallelepiped shape. The GPS case 2H stores the antenna 2A, the GPS receiver 2B, and the position transmitter 2D. The antenna 2A has a thin plate like shape and a surface directed upward. The antenna 2A is provided behind the seat 15. The antenna 2A is provided in a position higher than the rear frames 10B.

With reference to Figs. 10 and 11, the taillight 21 is provided under the GPS unit 2. The taillight 21 includes a lamp 21A as a light source, a light source case 21 B, and a lens 21C. The light source case 21 B has an opening at the lower surface and the rear surface. A part of the light source case 21 B is made of metal. The lamp 21A is attached to the front surface of the light source case 21 B. The lens 21C covers the lower surface and the rear surface of the light source case 21 B. A pair of attachment members 22 are provided at the front ends of the right and left side surfaces of the taillight 21. The attachment members 22 have a plate shape and extend forward. The attachment members 22 are provided to the support member 19A.

The antenna 2A receives GPS signals transmitted from the GPS satellite 104. In order to reduce degradation in the receiving sensitivity, it is preferable that less obstructing objects that lower the receiving sensitivity are provided above the antenna 2A. Metal automotive parts particularly interfere with GPS signals and therefore it is preferable that less large size metal automotive parts are provided above the antenna 2A.

According to the embodiment, the engine 3, the fuel tank 17, and the grab bar 23 are provided ahead of the antenna 2A. Furthermore, the antenna 2A is provided in a position higher than the rear frames 10B and the taillight 21. More specifically, large size metal automotive parts are provided in positions apart from the antenna 2A or lower than the antenna 2A. Therefore, the receiving sensitivity of the antenna 2A is kept from being degraded.

The antenna 2A is further provided behind the seat 15. A human body affects the receiving sensitivity of the antenna 2A. When the GPS unit 2 is provided under the seat 15, the receiving sensitivity may be lowered. According to the preferred embodiment, the antenna 2A is not provided under the seat 15. Therefore, degradation in the receiving sensitivity of the antenna 2A that can be caused by the rider seated on the seat 15 can be reduced.

The rear carrier 25 made of metal is provided above the GPS unit 2. However, a gap is formed between adjacent bars 25B. The transverse area of the bar 25B is smaller than that of the grab bar 23. Therefore, degradation in the receiving sensitivity caused by the rear carrier 25 can be reduced.

More preferably, as shown in Fig. 4, the antenna 2A is provided under the gap formed between adjacent bars 25B. In this case, degradation in the receiving sensitivity of the antenna 2A caused by the bars 25B can be more reduced.

With reference to Figs. 8 and 11, a connector 2C is provided at the front surface of the GPS case 2H. The connector 2C includes a plurality of terminals and is connected to a connector 31 formed at an end of a wire harness 30.

The GPS unit 2 is connected to the ECU 6 (Fig. 1), the horn controller 7 (Fig. 1), the lamp controller 8 (Fig. 1), and a battery that is not shown through the wire harness 30. The ECU 6, the horn controller 7, the lamp controller 8, and the battery are provided ahead of the GPS unit 2. The connector 2C is not provided at a side surface of the GPS case 2H, but at the front surface. Therefore, the wire harness 30 can be prevented from being largely bent in the vicinity of the GPS unit 2.

The beam 19B of the attachment frame 18 has a through hole 19C in the center. The wire harness 30 is extended forward through the through hole 19C and connected to the ECU 6, the horn controller 7, the lamp controller 8, and the battery. The wire harness 30 is passed through the through hole 19C and can extend forward without being largely bent.

The GPS unit 2 is powered from the battery. The GPS unit 2 includes an exchangeable battery in the GPS case 2H. The battery may be a primary battery that discharges only or a secondary battery that is recharged by a battery. The battery is used as an auxiliary power supply.

As shown in Fig. 8, the connector 2C is provided on the right side of the central axis C of the front surface of the GPS case 2H. Stated differently, the connector 2C is provided more on the right surface side of the GPS case 2H than the central axis C. A rib-shaped interfering member 45 is provided on the unit attachment member 20. The interfering member 45 is provided in front of the GPS case 2H and on the opposite side to the connector 2C with respect to the central axis C. More specifically, the interfering member 45 is provided on the left side of the central axis C.

As described above, the GPS unit 2 has a substantially flat rectangular parallelepiped shape. Therefore, the GPS unit 2 can be attached upside down to the attachment member 20. In this case, the antenna 2A is provided near the lower surface of the GPS unit 2 case 2H, and therefore the receiving sensitivity is degraded.

The interfering member 45 prevents the GPS unit 2 from being attached in a wrong manner. If the GPS unit 2 is attached upside down to the unit attachment member 20, the connector 2C is provided on the left side of the central axis C. In this case, the connector 2C hits the interfering member 45. The interfering member 45 is positioned in front of the connector 2C and the connector 31 and the connector 2C are not connected as they are obstructed the interfering member 45. Therefore, the operator realizes that the GPS unit 2 has been attached in a wrong manner.

With reference to Fig. 11, the storage member 28 is made of synthetic resin. The front plate 28f of the storage member 28 extends obliquely downward to the front from the upper plate 28a. The tip end of the front plate 28f is provided under the rear part of the seat 15. The lower end of the front plate 28f is attached to the beam 19B of the attachment frame 18 by bolts 29. The lower end of the front plate 28f is attached to the rear frames 10B through the attachment frame 18 under the seat 15. In order to remove the storage member 28, the seat 15 must be removed first.

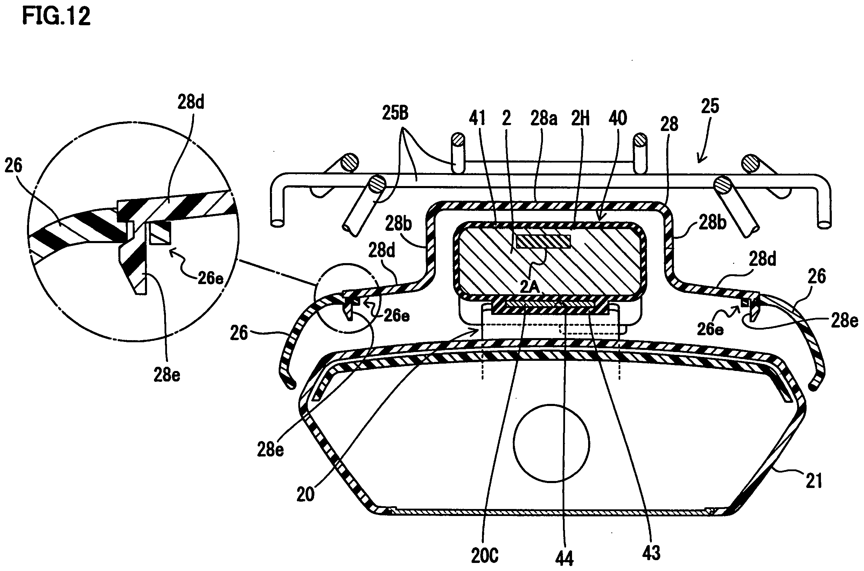

Fig. 12 is a sectional view taken along line XII-XII in Fig. 4. With reference to Fig. 12, the storage member 28 is held and fixed between the side covers 26.

With reference to Figs. 11 and 12, the storage member 28 includes the front plate 28f, the upper plate 28a, a pair of side plates 28b, a rear plate 28c, and a pair of flange plates 28d. The rear plate 28c is pendent from the rear end of the upper plate 28a. The rear plate 28c has a length larger than the height of the GPS unit 2. The lower end of the rear plate 28c is provided under the lower end of the rear surface of the GPS unit 2. Therefore, the GPS unit 2 cannot be recognized visually from behind.

The side plates 28b are pendent from the right and left side edges of the upper plate 28a. The flange plates 28d extend horizontally outwardly from the lower ends of the side plates 28b.

The storage member 28 stores the GPS unit 2. The unit attachment member 20 is provided between the GPS unit 2 and the taillight 21.

A plurality of hooks 28e is formed at the side edges of the flange plates 28d. The hooks 28e are pendent downward. A plurality of attachment members 26e corresponding to the hooks 28e are provided at the upper end of the side covers 26. The attachment members 26e each have a through hole corresponding to the hook 28e. The insertion of the hooks 28e into the through holes of the attachment members 26e attaches the storage member 28 to the two side covers 26.

With reference to Fig. 8, a support plate 27 is extended between the pair of rear frames 10B. The support plate 27 is provided ahead of the attachment frame 18. Plate-shaped attachment members 27A are provided upright at the right and left ends of the support plate 27.

The side covers 26 are attached to the support plate 27 and the attachment frame 18 by bolts. More specifically, the side covers 26 include side cover attachment members 26A and 26B. The side cover attachment members 26A are provided in positions corresponding to the attachment members 27A. The side cover attachment members 26A each have a through hole through which a bolt is inserted and are attached to the support plates 27 by bolts. The plate-shaped side cover attachment members 26B each have a through hole through which a bolt is inserted and are attached to the attachment frame 18 by bolts. The side cover attachment members 26A and 26B are provided under the seat 15.

Furthermore, a pin 26C is arranged horizontally inwardly at the inner surface of the rear part of each of the side covers 26. The attachment members 22 and the support members 19A of the taillight 21 each have a through hole corresponding to the pin 26C. The insertion of the pins 26C into the through holes of the attachment members 22 and the support members 19A attaches the taillight 21 to the attachment frame 18.

As in the foregoing, the side covers 26 are attached to the rear frames 10B through the support plate 27 and the attachment frame 18 by the side cover attachment members 26A and 26B provided under the seat 15. Therefore, in order to remove the side covers 26 from the motorcycle 1, the seat 15 must be removed first.

The GPS unit 2 is not easily removed from the motorcycle 1 for the following reason. In order to remove the GPS unit 2, the storage member 28 must be removed. As described above, the storage member 28 is held and fixed between the two side covers 26. The storage member 28 is further attached to the rear frames 10B through the attachment frame 18.

In order to remove the storage member 28, the seat 15 is removed from the rear frames 10B. Then, the grab bar 23 and the rear carrier 25 are removed from the rear frames 10B. Then, the bolts 29 that connect the lower ends of the front plate 28f of the storage member 28 and the attachment frame 18 are removed. In this way, the storage member 28 is removed from the rear frames 10B. However, the storage member 28 is still not removed from the motorcycle 1. This is because the storage member 28 is held between the side covers 26. Therefore, the side covers 26 are removed from the support plate 27 and the attachment frame 18. Then, the hooks 28e are removed from the attachment members 26e. In this way, the storage member 28 is removed from the side covers 26. Through the above-described steps, the storage member 28 is finally removed from the motorcycle 1.

As in the foregoing, the storage member 28 is not easily removed. Therefore, when the motorcycle 1 is stolen, it is not easy for the criminal to remove the GPS unit 2 and it takes long to remove it too. Therefore, the management center 103 can track down the stolen motorcycle 1.

One might think of the possibility of removing the taillight 21 and then the GPS unit 2 from below. However, if the taillight 21 is removed, the unit attachment member 20 is provided under the GPS unit 2. Therefore, the GPS unit 2 is not easily removed as the unit attachment member 20 becomes an obstacle.

In addition, the rear carrier 25 is provided above the storage member 28, and therefore the GPS unit 2 is not easily removed from above.

### Second Embodiment

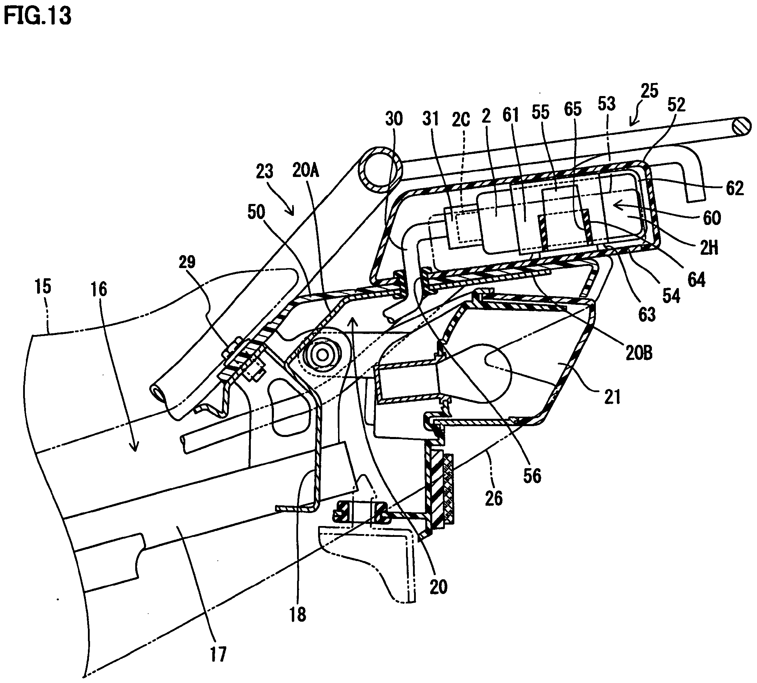

Fig. 13 is a fragmentary sectional view of the rear part of a motorcycle according to a second embodiment. With reference to Fig. 13, the motorcycle according to the second embodiment is different from the first embodiment in that an additional storage member 52 is provided instead of the storage member 28. The storage member 52 has a lower plate 54. In other words, the storage member 52 has a box shape. The storage member 52 is provided behind the seat 15. A GPS unit 2 is stored in the storage member 52. Now, the motorcycle according to the second preferred embodiment will be described in detail.

Similarly to the first embodiment, a unit attachment member 20 is provided between a taillight 21 and the GPS unit 2. A rear carrier 25 is provided above the unit attachment member 20. The storage member 52 is provided between the unit attachment member 20 and the rear carrier 25.

A rear cover 50 is provided between the unit attachment member 20 and the storage member 52. The tip end of the rear cover 50 is attached to an attachment frame 18 by bolts 29. The rear cover 50 extends slightly obliquely upward to the back. The rear end of the rear cover 50 is provided above the rear end of the taillight 21.

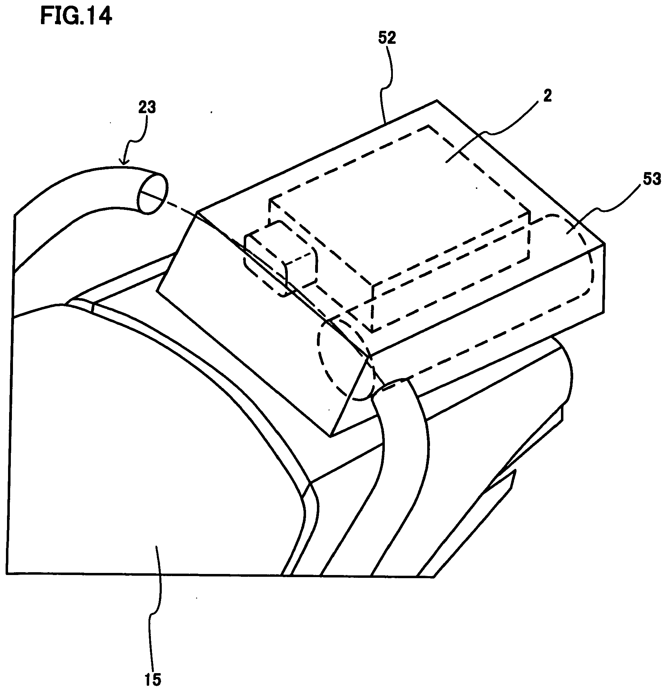

The storage member 52 is provided on the rear cover 50. The storage member 52 is fixed on the rear cover 50. Fig. 14 is a perspective view of the rear part of the motorcycle according to the second embodiment, showing the inside of the storage member 52. With reference to Figs. 13 and 14, the storage member 52 made of synthetic resin stores the GPS unit 2 and a tool case 53 storing tools so that they are arranged substantially horizontally next to each other in the crosswise direction. The storage member 52 has an openable door that is not shown. Therefore, the tool case 53 can be taken out. In Fig. 14, the GPS unit 2 and the tool case 53 are arranged substantially horizontally next to each other in the crosswise direction, while they can be arranged one ahead of the other in the front-back direction. In short, the GPS unit 2 and the tool case 53 are stored in the storage member 52 in a substantial horizontal arrangement.

The GPS unit 2 is attached on the lower plate 54 of the storage member 52. A connector 2C is provided at the front surface of the GPS unit 2. The lower plate 54 of the storage member 52, the rear cover 50, and the unit attachment member 20 each have a through hole 56. A wire harness 30 connected to the connector 2C extends forward through the through hole 56.

The GPS unit 2 is attached to the lower plate 54 through an elastic band 60. The elastic band 60 is made of rubber and includes band portions 61 and 62, a seating member 63, and an attachment member 64. The band portion 61 has a square tube shape. The band portion 62 is band-shaped and connects the rear ends of the upper and lower surfaces of the band portion 61. The seating member 63 is formed at the lower surface of the outer side of the band portion 61. The attachment member 64 is formed at each of the right and left side surfaces of the band portion 61. The attachment members 64 each have a rectangular parallelepiped shape and a through hole penetrating in the vertical direction.

Two plate-shaped attachment members 55 are arranged upright on the lower plate 54 of the storage member 52. The two attachment members 55 correspond to the two attachment members 64 of the elastic band 60.

The GPS unit 2 provided with the elastic band 60 is attached to the storage member 52. The attachment members 55 are inserted into the through holes in corresponding attachment members 64. At the time, the attachment members 55 are inserted into the through holes until the seating member 63 is in contact with the lower plate 54. The contact area of the GPS unit 2 to the storage member 52 is small by the function of the seating member 63, so that the vibration of the motorcycle is not easily transmitted to the GPS unit 2.

According to the embodiment, the GPS unit 2 and the tool case 53 are stored in one storage member 52. Therefore, the number of parts can be reduced as compared to the case in which the GPS unit 2 and the tool case 53 are stored in separate boxes. In addition, the tool box 53 is arranged and stored substantially horizontally with the GPS unit 2. Metal tools are not provided above the antenna 2A and therefore degradation in the receiving sensitivity can be reduced.

The present teaching is not limited to the above-described preferred embodiments.

The grab bar 23 and the rear carrier 25 do not have to be connected by welding or the like. The rear carrier 25 may be attached to the rear frames 10B separately from the grab bar 23. Only the rear carrier 25 may be provided without providing the grab bar 23. The shape of the grab bar 23 is not particularly limited as long as a tandem rider can grasp it. The shape of the rear carrier 25 is not particularly limited as long as it includes a plurality of bars arranged apart from one another. The connector 2C may be provided at a surface other than the front surface of the GPS unit 2. The shape of the connector 2C is not particularly limited. The GPS unit 2 can be attached to the motorcycle without using the elastic band 40 or 60. The method of attaching the GPS unit 2 is not particularly limited.

In the above-described embodiments, the upper plate 28a, the front plate 28f, the rear plate 28c, and the side plate 28b are formed integrally. However, at least one of the upper plate 28a, the front plate 28f, the rear plate 28c, and the side plate 28b may be formed in a detachable manner. A part or the front part of the storage member 28 may be formed integrally with the side covers 26.

The GPS unit 2 does not have to control the operation of the engine. The GPS unit 2 does not have to transmit a driving signal. The GPS unit 2 does not have to control the horn or lamp.

The motorcycle according to the present embodiment includes a frame, a seat, a taillight, and a GPS unit. The frame extends from a front to a back of the motorcycle. The seat is provided above a rear part of the frame. The GPS unit is provided above the taillight and includes an antenna, a GPS receiver, and a position transmitter. The antenna is provided in a position higher than the frame and behind the seat. The GPS receiver calculates positional information based on GPS signals received by the antenna. The position transmitter transmits a position signal indicating the positional information calculated by the GPS receiver from the antenna.

In the motorcycle, the seat, the taillight, and the frame are not provided above the GPS unit. Furthermore, the antenna of the GPS unit is provided behind the seat and in a position higher than the frame, and therefore the receiving sensitivity is not easily degraded by a rider and a tandem rider seated on the seats. Therefore, the degradation in the receiving sensitivity of the antenna is reduced. In addition, the GPS unit is provided above the taillight and the antenna is provided behind the seat and in a position higher than the frame. Therefore, when the GPS unit is provided, the body size can be prevented from being increased.

The motorcycle preferably further includes a storage member. The storage member is provided above the taillight. The storage member includes an upper plate, a front plate, a rear plate, and a side plate. The GPS unit is stored in the storage member.

In this example, the upper surface, the front surface, the rear surface, and the side surface are covered with the storage member. The taillight is provided under the GPS unit. Therefore, the GPS unit is not easily removed.

The front plate of the storage member extends obliquely downward to the front from the upper plate of the storage member. The lower end of the front plate is provided under the seat and attached to the frame.

In this case, in order to remove the storage member, the seat must be removed first. Therefore, the GPS unit is not easily removed.

The storage member further has an opening at its lower surface. The motorcycle preferably further includes a unit attachment member. The unit attachment member is attached to the frame and provided between the taillight and the GPS unit. The GPS unit is attached on the unit attachment member.

The taillight is designed so that its lamp can be exchanged easily. Therefore, the taillight can be removed easily in some cases. In such a case, the GPS unit provided above the taillight may be removed easily. However, if the taillight is removed, the unit attachment member is provided under the GPS unit. Therefore, the GPS unit is not easily removed as the unit attachment member serves as an obstacle.

The GPS unit further preferably includes a GPS case and a connector. The GPS case stores an antenna, a GPS receiver, and a position transmitter. The connector is formed at the front of the GPS case. The connector is provided nearer to one side surface of the GPS case than the central axis of the front surface of the GPS case. The unit attachment member further includes an interfering member. The interfering member is provided in front of the front surface of the GPS case and on the opposite side to the connector with respect to the central axis of the front surface of the GPS case. The antenna is provided in the upper part of the GPS case.

In this way, the interfering member prevents the GPS unit from being attached in a wrong manner. If the GPS unit is attached upside down to the unit attachment member, the connector hits the interfering member. When the interference member is provided in front of the connector and the connector cannot be connected as it is bothered by the interfering member. Therefore, the operator realizes the error in attaching the GPS unit.

The motorcycle preferably further includes a pair of side covers. The side covers are attached on the right and left side surfaces of the rear part of the frame. The storage member is attached between the pair of side covers. Each of the pair of side covers includes a side cover attachment member. The side cover attachment member is provided under the seat and attached to the frame.

In this way, in order to remove the storage member, the side covers must be removed. Therefore, the seat is removed from the frame first. Then, the side covers are removed from the frame. Then, the storage member is removed from the side covers. Through these steps, the storage member is finally removed from the motorcycle. Therefore, the GPS unit is not easily removed.

The GPS unit preferably has a flat shape and is laid in the storage member.

In this way, the height of the storage member can be kept low. This can prevent the rear part of the motorcycle from increasing in size.

The storage member preferably further includes a lower plate.

In this way, if the taillight is removed, the lower plate is provided under the GPS unit. Therefore, the lower plate interferes and the GPS unit is not removed easily.

The storage member preferably stores the GPS unit and tools substantially horizontally next to each other.

In this way, as compared to the case in which the GPS unit and the tools are stored in separate storage boxes, the number of parts can be reduced. Furthermore, the tools are not provided above the antenna in the storage member so that degradation in the receiving sensitivity can be reduced.

The motorcycle preferably has a grab bar. The antenna is provided behind the grab bar.

In this way, the receiving sensitivity of the antenna is unlikely to be reduced by the grab bar. Therefore, degradation in the receiving sensitivity can be reduced.

The motorcycle preferably further includes a rear carrier. The rear carrier is provided above the storage member. The rear carrier includes a plurality of bars provided apart from one another.

This makes it even more difficult to remove the GPS unit. The rear carrier is provided above the GPS unit, but a gap is formed between adjacent bars. Therefore, degradation in the receiving sensitivity caused by the rear carrier is reduced.

Although in the foregoing description, motorcycles 1 have been described as preferred embodiments, the above teaching is also applicable to other kinds of straddle-type vehicles, such as all-terrain vehicles and snow mobiles. In general, such a straddle-type vehicle has a frame 10 and a seat 15 on which the rider can be seated straddling the frame 10 while being seated.

Among others, the description above discloses an embodiment of a motorcycle in which a GPS unit 2 includes an antenna 2A arranged to receive GPS signals from a GPS satellite 104, a GPS receiver 2B arranged to calculate positional information based on the GPS signals, and a position transmitter 2D arranged to transmit a position signal indicating the positional information. The GPS unit 2 is provided behind a seat 15 and therefore degradation in the receiving sensitivity caused by a rider can be reduced. The GPS unit 2 is provided above a taillight 21, and the antenna 2A of the GPS unit 2 is provided in a position higher than rear frames 10B. Therefore, degradation in the receiving sensitivity caused by the taillight 21 and the rear frames 10B can be reduced.

## Claims

1. Straddle-type vehicle, in particular a motorcycle, comprising:
a frame (10) extending from a front to a back of the straddle-type vehicle (1);
an engine (3) provided at a front part of the frame (10);
a fuel tank (17) provided above the front part of the frame (10);
a seat (15) provided above a rear part of the frame (10);
a taillight (21); and
a Global Positioning System (GPS) unit (2) provided above the taillight (21),
wherein the GPS unit (2) comprises an antenna (2A) provided in a position higher than a rear end of the frame (10) behind the seat (15) and behind a grab bar (23) of the straddle-type vehicle (1), wherein the GPS unit (2) further comprises a GPS receiver (2B) configured to calculate positional information based on a GPS signal received by the antenna (2A), and a position transmitter (2C) configured to transmit a position signal indicating the positional information calculated by the GPS receiver (2B) from the antenna (2A).

2. Straddle-type vehicle according to claim 1, wherein the GPS unit (2) is stored in a storage member (28, 52) provided above the taillight (21), said storage member (28, 52) preferably including an upper plate (28a), a front plate (28f), a rear plate (28c), and a pair of side plates (28b).

3. Straddle-type vehicle according to claim 2, wherein the front plate (28a) of the storage member (28) extends obliquely downward to the front of the straddle-type vehicle (1) from the upper plate (28f), and/or a lower end of the front plate (28a) is provided under the seat (15) and is attached to the frame (10).

4. Straddle-type vehicle according to claim 2 or 3, wherein the storage member (28) has an opening at its lower end.

5. Straddle-type vehicle according to at least one of claims 1 to 4, wherein a unit attachment member (20) is attached to the frame (10) and is provided between the taillight (21) and the GPS unit (2), the GPS unit (2) being attached on the unit attachment member (20).

6. Straddle-type vehicle according to claim 5, wherein the GPS unit (2) further comprises a GPS case (2H) storing the antenna (2A), the GPS receiver (2B), and the position transmitter (2D), and a connector (2C) formed at a front surface of the GPS case (2H), the connector (2C) being provided nearer to one side surface of the GPS case (2H) than a central axis (C) of the front surface of the GPS case (2H), and/or
the unit attachment member (20) further comprising an interfering member (45) provided in front of the GPS case (2H) and on the opposite side to the connector (2C) with respect to a central axis (C) of the front surface of the GPS case (2H), and/or
the antenna (2A) being provided in an upper part of the GPS case (2H).

7. Straddle-type vehicle according to at least one of claims 2 to 6, wherein a pair of side covers (26) is attached to right and left side surfaces of the rear part of the frame (10), and the storage member (28) is attached between the pair of side covers (26).

8. Straddle-type vehicle according to claim 7, wherein each of the pair of the side covers (26) comprises a side cover attachment member (26A, 26B, 26C) provided under the seat (15) and attached to the frame (10).

9. Straddle-type vehicle according to at least one of claims 2 to 8, wherein the GPS unit (2) is substantially flat and laid in the storage member (28, 52).

10. Straddle-type vehicle according to at least one of claims 2 to 9, wherein the storage member (52) further comprises a lower plate (54).

11. Straddle-type vehicle according to claim 10, wherein the storage member (52) is configured to store the GPS unit (2) and a tool (53) substantially horizontally next to each other.

12. Straddle-type vehicle according to at least one of claims 2 to 11, wherein a rear carrier (25) preferably including a plurality of bars (25A, 25B) provided apart from one another is located above the storage member (28).

## Patentansprüche

1. Spreiz-Sitz-Typ-Fahrzeug, insbesondere ein Motorrad, das umfasst:
einen Rahmen (10), der sich von einer Vorder-Seite zu einer Rück-Seite des Spreiz-Sitz-Typ-Fahrzeug (1) erstreckt;
einen Motor (3), der an einem vorderen Teil des Rahmens (10) vorgesehen ist;
einen Kraftstofftank (17), der oberhalb des vorderen Teils des Rahmens (10) vorgesehen ist;
einen Sitz (15), der oberhalb eines hinteren Teils des Rahmens (10) vorgesehen ist; ein Rück-Licht (21); und
eine Global-Positionierungs-System (GPS) Einheit (2), die oberhalb des Rück-Lichts (21) vorgesehen ist, wobei die GPS-Einheit (2) eine Antenne (2a) umfasst, die in einer Position höher als ein hinteres Ende des Rahmens (10), hinter dem Sitz (15) und hinter einer Griffstange (23) des Spreiz-Sitz-Typ-Fahrzeug (1), vorgesehen ist, wobei die GPS-Einheit (2) weiterhin einen GPS-Empfänger (2B) umfasst, der konfiguriert ist um Positions-Informationen auf Grundlage eines GPS-Signals, empfangen durch die Antenne (2A), zu berechnen, und eine Positions-Übertrager (2C), der konfiguriert ist um ein Positions-Signal, welches die Positions-Information anzeigt, berechnet durch den GPS-Empfänger (2B), von der Antenne (2A) zu übertragen.

2. Spreiz-Sitz-Typ-Fahrzeug gemäß Anspruch 1, wobei die GPS-Einheit (2) in einem Lager-Element (28, 52) gelagert ist, das oberhalb des Rück-Lichts (21) vorgesehen ist, dieses Lager-Element (28, 52) beinhaltet bevorzugt eine obere Platte (28a), eine vordere Platte (28f), eine hintere Platte (28c) und ein Paar von seitlichen Platten (28b).

3. Spreiz-Sitz-Typ-Fahrzeug gemäß Anspruch 2, wobei die vordere Platte (28a) des Lager-Elements (28) sich schräg nach unten zu der Vorder-Seite des Spreiz-Sitz-Typ-Fahrzeugs (1) von der oberen Platte (28f) erstreckt, und/oder ein unteres Ende der vorderen Platte (28a) ist unter dem Sitz (15) vorgesehen und an dem Rahmen (10) angebracht.

4. Spreiz-Sitz-Typ-Fahrzeug gemäß Anspruch 2 oder 3, wobei das Lager-Element (28) eine Öffnung an dessen unteren Ende hat.

5. Spreiz-Sitz-Typ-Fahrzeug gemäß zumindest einem der Ansprüche 1 bis 4, wobei ein Einheit-Anbringungs-Element (20) an dem Rahmen (10) angebracht ist und zwischen dem Rück-Licht (21) und der GPS-Einheit (2) vorgesehen ist, die GPS-Einheit (2) ist an dem Einheit-Anbringungs-Element (20) angebracht.

6. Spreiz-Sitz-Typ-Fahrzeug gemäß Anspruch 5, wobei die GPS-Einheit (2) weiterhin umfasst ein GPS-Gehäuse (2H), welches die Antenne (2A), den GPS-Empfänger (2b), und den Positions-Übertrager (2D) lagert, und ein Verbinder (2C) ist an einer vorderen Fläche des GPS-Gehäuses (2H) ausgebildet, der Verbinder (2C) ist näher zu der eine seitlichen Fläche des GPS-Gehäuses (2H) als eine Zentral-Achse der vorderen Fläche des GPS-Gehäuses (2H) vorgesehen,
und/oder
das Einheit-Anbringungs-Element (20) umfasst weiterhin ein Überschneidungs-Element (45), das vor dem GPS-Gehäuse (2H) und an der gegenüberliegenden Seite zu dem Verbinder (2C) mit Bezug auf eine Zentral-Achse (C) der vorderen Fläche des GPS-Gehäuses (2H) vorgesehen ist,
und/oder
die Antenne (2A) in einem oberen Teil des GPS-Gehäuses (2H) vorgesehen ist.

7. Spreiz-Sitz-Typ-Fahrzeug gemäß zumindest einem der Ansprüche 2 bis 6, wobei ein Paar von Seiten-Abdeckungen (26) an rechten und linken Seiten-Flächen des hinteren Teils des Rahmens (10) angebracht sind, und dass Lager-Element (28) ist zwischen dem Paar von Seiten-Abdeckungen (26) angebracht.

8. Spreiz-Sitz-Typ-Fahrzeug gemäß Anspruch 7, wobei jedes von dem Paar der Seiten-Abdeckungen (26) ein Seiten-Abdeckungs-Anbringungs-Element (26A, 26B, 26C) umfasst das unter dem Sitz (15) vorgesehen ist und an dem Rahmen (10) angebracht ist.

9. Spreiz-Sitz-Typ-Fahrzeug gemäß zumindest einem der Ansprüche 2 bis 8, wobei die GPS-Einheit (2) im Wesentlichen flach ist und in das Lager-Element (28, 52) gelegt ist.

10. Spreiz-Sitz-Typ-Fahrzeug gemäß zumindest einem der Ansprüche 2 bis 9, wobei das Lager-Element (52) weiterhin eine untere Platte (54) umfasst.

11. Spreiz-Sitz-Typ-Fahrzeug gemäß Anspruch 10, wobei das Lager-Element (52) konfiguriert ist um die GPS-Einheit (2) und ein Werkzeug (53) im Wesentlichen horizontal nahe zueinander zu lagern.

12. Spreiz-Sitz-Typ-Fahrzeug gemäß zumindest einem der Ansprüche 2 bis 11, wobei ein hinterer Träger (25), der vorzugsweise eine Mehrzahl von Stangen (25A, 25B) beinhaltet, die voneinander beabstandet vorgesehen sind, oberhalb des Lager-Elements (28) positioniert ist.

## Revendications

1. Véhicule de type à selle, notamment motocyclette, comprenant :
un cadre (10) s'étendant de l'avant vers l'arrière du véhicule de type à selle (1);
un moteur (3) situé au niveau d'une partie antérieure du cadre (10) ;
un réservoir de carburant (17) situé au-dessus de la partie antérieure du cadre (10) ;
un siège (15) situé au-dessus d'une partie postérieure du cadre (10) ;
un feu arrière (21) ; et
une unité (2) de système de géolocalisation par satellite (GPS) située au-dessus du feu arrière (21), l'unité GPS (2) comprenant une antenne (2A) placée dans une position plus élevée qu'une extrémité postérieure du cadre (10), derrière le siège (15) et derrière une barre de maintien passager (23) du véhicule de type à selle (1), l'unité GPS (2) comprenant, en outre, un récepteur GPS (2B) conçu pour calculer des informations de position sur la base d'un signal GPS reçu par l'antenne (2A), et un émetteur de position (2C) conçu pour émettre un signal de position indiquant les informations de position calculées par le récepteur GPS (2B) depuis l'antenne (2A).

2. Véhicule de type à selle selon la revendication 1, l'unité GPS (2) étant rangée dans un élément de rangement (28, 52) situé au-dessus du feu arrière (21), ledit élément de rangement (28, 52) incluant, de préférence, une plaque supérieure (28a), une plaque antérieure (28f), une plaque postérieure (28c) et deux plaques latérales (28b).

3. Véhicule de type à selle selon la revendication 2, la plaque antérieure (28a) de l'élément de rangement (28) s'étendant obliquement vers le bas, vers l'avant du véhicule de type à selle (1), depuis la plaque supérieure (28f) et/ou une extrémité inférieure de la plaque antérieure (28a) passant sous le siège (15) et étant fixée au cadre (10).

4. Véhicule de type à selle selon la revendication 2 ou 3, l'élément de rangement (28) étant pourvu d'une ouverture à son extrémité inférieure.

5. Véhicule de type à selle selon au moins une des revendications 1 à 4, un élément de fixation d'unité (20) étant fixé sur le cadre (10) et étant situé entre le feu arrière (21) et l'unité GPS (2), l'unité GPS (2) étant fixée sur l'élément de fixation d'unité (20).

6. Véhicule de type à selle selon la revendication 5, l'unité GPS (2) comprenant, en outre, un boîtier GPS (2H) abritant l'antenne (2A), le récepteur GPS (2B) et l'émetteur de position (2D), ainsi qu'un connecteur (2C) formé au niveau d'une surface antérieure du boîtier GPS (2H), le connecteur (2C) étant plus près d'une surface latérale du boîtier GPS (2H) qu'un axe central (C) de la surface antérieure du boîtier GPS (2H), et/ou
l'élément de fixation d'unité (20) comprenant, en outre, un élément interférant (45) situé devant le boîtier GPS (2H) et sur le côté opposé au connecteur (2C) par rapport à l'axe central (C) de la surface antérieure du boîtier GPS (2H), et/ou l'antenne (2A) étant située dans une partie supérieure du boîtier GPS (2H).

7. Véhicule de type à selle selon au moins une des revendications 2 à 6, une paire de panneaux latéraux (26) étant fixée sur les surfaces latérales droite et gauche de la partie postérieure du cadre (10) et l'élément de rangement (28) étant fixé entre les deux panneaux latéraux (26).

8. Véhicule de type à selle selon la revendication 7, chaque panneau de la paire de panneaux latéraux (26) comportant un élément de fixation de panneau latéral (26A, 26B, 26C) situé sous le siège (15) et fixé au cadre (10).

9. Véhicule de type à selle selon au moins une des revendications 2 à 8, l'unité GPS (2) étant pratiquement plate et posée à plat dans l'élément de rangement (28, 52).

10. Véhicule de type à selle selon au moins une des revendications 2 à 9, l'élément de rangement (52) comprenant, en outre, une plaque inférieure (54).

11. Véhicule de type à selle selon la revendication 10, l'élément de rangement (50) étant conçu pour ranger l'unité GPS (2) et un outil (53) de manière sensiblement horizontale l'un à côté de l'autre.

12. Véhicule de type à selle selon au moins une des revendications 2 à 11, un porte-bagages arrière (25) comprenant de préférence une pluralité de barres (25A, 25B) espacées les unes par rapport aux autres étant situé au-dessus de l'élément de rangement (28).
